(19) **Europäisches Patentamt / European Patent Office / Office européen des brevets**

(11) **EP 1 811 679 B1**

(12) **FASCICULE DE BREVET EUROPEEN**

(45) Date de publication et mention de la délivrance du brevet:
**09.06.2010 Bulletin 2010/23**

(51) Int Cl.:
*H04B 1/69* *(2006.01)*    *H04B 1/10* *(2006.01)*

(21) Numéro de dépôt: **07100553.2**

(22) Date de dépôt: **15.01.2007**

(54) **Chaîne de réception de signaux**

Empfangskette für Signale

Signal reception chain

(84) Etats contractants désignés:
**DE ES FI GB SE**

(30) Priorité: **19.01.2006 FR 0650188**

(43) Date de publication de la demande:
**25.07.2007 Bulletin 2007/30**

(73) Titulaire: **Commissariat à l'énergie atomique et aux énergies alternatives**
**75015 Paris (FR)**

(72) Inventeur: **LACHARTRE, David**
**38330, MONTBONNOT (FR)**

(74) Mandataire: **Poulin, Gérard**
**Brevatome**
**3, rue du Docteur Lancereaux**
**75008 Paris (FR)**

(56) Documents cités:
- **STOICA, L. RABBACHIN, A. REPO, H.O. TIURANIEMI, T.S. OPPERMANN, I.: "An ultrawideband system architecture for tag based wireless sensor networks" IEEE TRANSACTIONS ON VEHICULAR TECNOLOGY, vol. 54, no. 5, 1 septembre 2005 (2005-09-01), pages 1632-1645, XP002400319**
- **GILBERT B: "A PRECISE FOUR-QUADRANT MULTIPLIER WITH SUBNANOSECOND RESPONSE" IEEE JOURNAL OF SOLID-STATE CIRCUITS, IEEE SERVICE CENTER, PISCATAWAY, NJ, US, vol. SC-3, no. 4, 1 décembre 1968 (1968-12-01), pages 365-373, XP000563293 ISSN: 0018-9200**

**Description**

**DOMAINE TECHNIQUE**

L'invention concerne le domaine de la réception de données. Les données transmises peuvent être sous forme d'ondes radiofréquences ou sous forme d'ondes électriques ou optiques. L'invention est particulièrement intéressante dans le cas de formes d'onde du type Ultra-WideBand (UWB) impulsionnelles. L'invention peut également s'appliquer aux systèmes utilisant des formes d'onde en bande étroite ou UWB non impulsionnelles, ainsi que pour des systèmes de localisation ou aux applications radars.

**ÉTAT DE LA TECHNIQUE ANTÉRIEURE**

Dans l'état de la technique actuel de la réception de signaux radiofréquences, il est possible de dénombrer une très grande variété d'architectures de réception de signaux. L'ouvrage « RF Microelectronics » de B. RAZAVI décrit plusieurs types de ces architectures.

Il existe actuellement une forte demande pour le développement d'architectures de réception simplifiées présentant une faible consommation. Le but est de fournir des solutions pour les systèmes de transmission dits bas débit dont les contraintes en termes de consommation et de coût sont importantes. Ces architectures simplifiées doivent cependant être en mesure de réceptionner des signaux de très faibles amplitudes afin notamment d'obtenir une portée intéressante sur les systèmes de transmission sans fils.

Dans le cas particulier des systèmes UWB impulsionnels, de nouvelles architectures ont récemment été proposées par des groupes de travail : « Proposals for IEEE 802.15.4a Alternate PHY ». Ces architectures se distinguent essentiellement par les traitements qui sont appliqués aux signaux dans la chaîne de réception ainsi que par leur implémentation sur silicium. Ces architectures peuvent être classées en plusieurs catégories.

Les architectures dites « transmitted reference» sont basées sur l'émission successive d'une impulsion de référence et d'une impulsion codant la donnée à transmettre. Le récepteur doit donc être en mesure d'effectuer une corrélation entre l'impulsion de référence retardée et l'impulsion codant la donnée à transmettre. Ce type de récepteur nécessite l'intégration d'une cellule de retard. Dans le cas d'une version analogique, l'implémentation de cette cellule de retard et de la cellule de corrélation est relativement complexe à cause de la précision requise et du contrôle de gain à l'entrée qui doit être fait. Dans le cas d'une version numérique, le traitement du retard et de la corrélation des signaux est simplifié mais la gestion des données numériques à haut débit peut s'avérer délicate et source de consommation.

Les architectures basées sur la détection de pics de tension ou sur la détection de fronts sont des solutions très simples au niveau de l'implémentation. Par contre, elles présentent des performances limitées en terme de portée puisqu'il est difficile d'effectuer des intégrations cohérentes, c'est-à-dire faire la moyenne de plusieurs impulsions reçues synchrones afin de réduire le bruit, pour augmenter le rapport signal à bruit des signaux reçus.

Les architectures basées sur un changement de fréquence sont intéressantes puisqu'elles permettent d'effectuer un certain nombre de traitements à plus basses fréquences. Cependant, elles nécessitent l'intégration d'un circuit de synthèse de fréquence fonctionnant à très haute fréquence et le contrôle de gain à l'entrée du mélangeur est complexe.

Les architectures à détection d'énergie représentent une alternative intéressante puisque le schéma d'implémentation est relativement simple. Elles permettent de capturer toute l'énergie présente à la réception et est compatible avec une intégration cohérente. Cependant, l'implémentation de ces circuits de détection dans des technologies silicium classiques est très délicate. La dynamique obtenue sur ces circuits est généralement faible. Il est possible de rendre la structure plus complexe pour améliorer la dynamique du détecteur d'énergie, mais au détriment des performances en fréquence. La consommation est alors plus élevée et la contrainte sur le circuit de contrôle de gain est sévère.

Une architecture de récepteur simplifiée a été récemment proposée dans la publication « STMicroelectronics proposal for IEEE 802.15.3a Alternate PHY » de D. Helal et al. Elle repose sur le principe d'une numérisation sur 1 bit du signal reçu à très haute fréquence (20 GHz). La conception du premier étage RF est simplifiée, ainsi que les contraintes de contrôle de gain. Cependant, compte tenu du débit de données élevé, la complexité et donc la consommation de la partie numérique associée à ce récepteur sont importantes. En outre, il est nécessaire d'effectuer une synchronisation précise entre l'émetteur et le récepteur ainsi qu'une bonne estimation de propagation des ondes. Il est possible de réduire la fréquence de numérisation du système en effectuant un sous échantillonnage du signal mais le traitement numérique reste important.

Le document "An Ultrawideband System Architecture for Tag Based Wireless Sensor Network" Stoica et al, IEEE, 2005, décrit une chaîne de réception de signaux comportant une cellule de Gilbert à deux voies d'entrée et un seul moyen de conversion analogique-numérique, sur la voie de sortie.

## EXPOSÉ DE L'INVENTION

Le but de la présente invention est de proposer une architecture de réception de signaux consommant peu, dont l'implémentation reste simple, et apportant une solution aux problèmes de dynamique des cellules de détection d'énergie ainsi qu'aux problèmes de contrôle de gain.

Pour atteindre ces buts, la présente invention propose une chaîne de réception de signaux comme dans la revendication 1.

Ainsi, la partie analogique de cette chaîne de réception étant réduite à la simple fonction de réception, son implémentation en est simplifiée.

De plus, les problèmes de dynamique de détection d'énergie sont simplifiés, notamment lorsque la chaîne de réception comporte une conversion analogique-numérique sur 1 bit, avec deux signaux corrélés.

La chaîne de réception de signaux peut comporter en outre des moyens d'amplification, par exemple disposés entre l'interface d'entrée et les moyens de conversion analogique-numérique.

Les moyens d'amplification peuvent réaliser une amplification linéaire ou non linéaire, telle une amplification avec saturation. Ainsi, il n'est pas nécessaire de réaliser un contrôle du gain.

Les moyens d'amplification peuvent avoir un gain constant.

Les moyens d'opérations entre lesdits signaux peuvent comporter des moyens de multiplication.

Les moyens de multiplication peuvent alors comporter au moins une porte OU exclusif lorsque le signal reçu est transformé en deux signaux corrélés et lorsque la conversion est réalisée sur 1 bit.

Dans ce cas, la sortie de la porte OU exclusif peut être une sortie inverseuse lorsque les deux signaux corrélés sont en phase, réalisant ainsi une porte NON OU exclusif.

Les moyens d'opérations peuvent comporter des moyens d'addition des signaux convertis lorsque lesdits signaux convertis sont en phase. Ainsi, le bruit est diminué sans modifier le signal initialement reçu.

Les moyens d'opérations peuvent comporter, lorsque lesdits signaux convertis sont en opposition de phase, des moyens de soustraction entre lesdits signaux. On reproduit ainsi une réception en mode différentiel, permettant de réduire ou d'annuler le bruit de mode commun.

Les moyens d'opérations peuvent également réaliser au moins une combinaison linéaire des signaux convertis, permettant par exemple de limiter le dynamique du signal numérique obtenu, ou bien réduire le bruit tout en retrouvant en sortie le signal différentiel initial.

Enfin, les moyens d'opérations peuvent également réaliser au moins une égalisation des signaux convertis, permettant de compenser les effets d'affaiblissement tout en réduisant le bruit. Cette égalisation consiste en une combinaison linéaire des signaux convertis, des éléments de retard étant associés à chacun des signaux.

Les moyens de conversion analogique-numérique peuvent être asynchrones, permettant ainsi de ne pas réaliser d'échantillonnage à ce niveau de la chaîne de réception.

Les moyens de conversion analogique-numérique peuvent comporter au moins un comparateur lorsque la conversion est réalisée sur 1 bit.

L'interface d'entrée peut comporter au moins une antenne.

L'interface d'entrée peut comporter au moins une antenne pour chacune des voies.

L'interface d'entrée peut répartir le signal reçu sur chacune des voies.

L'interface d'entrée peut comporter au moins un amplificateur différentiel faible bruit comprenant au moins deux entrées différentielles, la première étant reliée à l'antenne et la seconde à un potentiel nul, par exemple une masse, et au moins une sortie pour chacune des voies.

La seconde entrée différentielle peut être reliée au potentiel nul par l'intermédiaire d'au moins une impédance, par exemple égale à l'impédance équivalente de l'antenne.

L'interface d'entrée peut comporter au moins un transformateur balun comprenant un primaire relié entre l'antenne et un potentiel nul, par exemple une masse, et un secondaire relié aux voies.

Dans ce cas, le primaire peut être relié au potentiel nul par l'intermédiaire d'au moins une impédance, par exemple égale à l'impédance équivalente de l'antenne.

L'interface d'entrée peut comporter au moins un amplificateur faible bruit.

Les moyens de traitement numérique peuvent comporter, après les moyens d'opérations, des moyens de filtrage, tel un filtre passe bande, et/ou des moyens d'échantillonnage, et/ou des moyens de filtrage adaptés dynamiquement.

Les moyens de traitement numérique peuvent comporter, après les moyens d'opérations, une voie de communication pour un traitement des données transmises et une voie de localisation pour mesurer une distance qui sépare la chaîne de réception d'un émetteur du signal reçu.

Les moyens de traitement numérique peuvent également comporter, pour le traitement des données transmises, au moins un filtre intégrateur, et/ou au moins un filtre d'intégrations cohérentes, et/ou des moyens de démodulation et de synchronisation.

Les moyens de traitement numérique peuvent comporter, pour mesurer une distance séparant la chaîne de réception d'un émetteur du signal reçu, des moyens de sélection d'échantillons du signal reçu, et/ou au moins un filtre d'intégrations cohérentes.

Lorsque les moyens de traitement numérique comportent des moyens de démodulation et de synchronisation, les moyens de sélection d'échantillons du signal reçu peuvent être reliés auxdits moyens de démodulation et de synchronisation.

La présente invention concerne également un procédé de réception de signaux comme dans la revendication 24.

Le procédé de réception de signaux peut comporter en outre une étape d'amplification des signaux corrélés, pouvant par exemple être réalisée entre l'étape de répartition de chaque signal corrélé sur au moins une voie et l'étape de conversion analogique-numérique sur au moins 1 bit des signaux corrélés.

L'amplification des signaux corrélés peut être une amplification linéaire ou non linéaire, telle une amplification avec saturation, et/ou à gain constant.

Le procédé de réception de signaux, objet de la présente invention, peut comporter au moins une étape supplémentaire d'amplification faible bruit sur au moins une des voies avant l'étape d'amplification des signaux corrélés.

L'opération entre les signaux corrélés numériques peut comporter au moins une multiplication, au moins une addition lorsque lesdits signaux sont en phase, au moins une soustraction entre lesdits signaux lorsque lesdits signaux corrélés sont en opposition de phase, au moins une combinaison linéaire, ou encore au moins une égalisation des signaux.

Le procédé de réception de signaux peut comporter, après l'étape d'opération entre les signaux corrélés, au moins une étape de filtrage, tel un filtrage passe-bande, et/ou au moins une étape d'échantillonnage, et/ou au moins une étape de filtrage adaptée dynamiquement.

Le procédé de réception de signaux peut également comporter, après l'étape d'opération entre les signaux corrélés, au moins une étape de répartition du signal multiplié sur au moins une voie de communication et au moins une voie de localisation.

La conversion analogique-numérique peut être asynchrone.

Pour le traitement des données transmises, le procédé de réception de signaux peut comporter au moins une étape d'intégration du signal multiplié, et/ou au moins une étape d'intégrations cohérentes, et/ou au moins une étape de démodulation et de synchronisation.

Enfin, pour mesurer une distance séparant la chaîne de réception mettant en oeuvre ledit procédé de réception d'un émetteur du signal reçu, ledit procédé de réception de signaux peut comporter au moins une étape de sélection d'échantillons du signal reçu, et/ou au moins une étape d'intégrations cohérentes.

## BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :

- la figure 1 représente un exemple de schéma de principe de la chaîne de réception, objet de la présente invention,
- la figure 2 représente graphiquement un signal UWB, un signal UWB bruité et la puissance instantanée d'un signal en sortie de la chaîne de réception selon l'invention,
- la figure 3 représente une chaîne de réception, objet de la présente invention, comportant un premier exemple d'interface d'entrée,
- la figure 4 représente une chaîne de réception, objet de la présente invention, comportant un second exemple d'interface d'entrée,
- la figure 5 représente une chaîne de réception, objet de la présente invention, comportant un troisième exemple d'interface d'entrée,
- la figure 6 représente une chaîne de réception, objet de la présente invention, comportant un quatrième exemple d'interface d'entrée,
- la figure 7 représente une chaîne de réception, objet de la présente invention, selon un premier mode de réalisation,
- la figure 8 représente une chaîne de réception, objet de la présente invention, selon un second mode de réalisation,
- la figure 9 représente un signal de puissance instantanée, après filtrage, numérisé sur 1 bit et un signal de puissance instantanée, après filtrage, numérisé sur plusieurs bits.

## EXPOSÉ DÉTAILLÉ DE MODES DE RÉALISATION PARTICULIERS

L'invention est une chaîne de réception basée principalement sur la détection de l'énergie du signal reçu. Elle repose sur l'utilisation et le traitement de deux (ou plus) signaux corrélés (qui peuvent être en phase ou en opposition de phase) représentant le signal reçu. Ces deux signaux sont véhiculés sur deux voies identiques. L'invention se distingue des systèmes à antennes multiples (MIMO pour Multiple Input Multiple Output en anglais, ou entrée multiple sortie multiple) par une plus grande corrélation des signaux d'entrée. L'invention se distingue également des systèmes différentiels classiques où les deux signaux utilisés sont toujours en opposition de phase, l'information véhiculée et utilisée étant la différence entre les deux voies. Enfin, l'invention se distingue des récepteurs à signaux en quadrature (récepteur i/q) puisqu'il n'y a pas de déphasage entre les signaux des différentes voies autre qu'une éventuelle opposition de phase.

La présente invention concerne également un procédé de réception de signaux. Ce procédé peut par exemple être mis en oeuvre par la chaîne de réception, objet de la présente invention. Ce procédé va être décrit implicitement dans la description de la chaîne de réception, également objet de la présente invention.

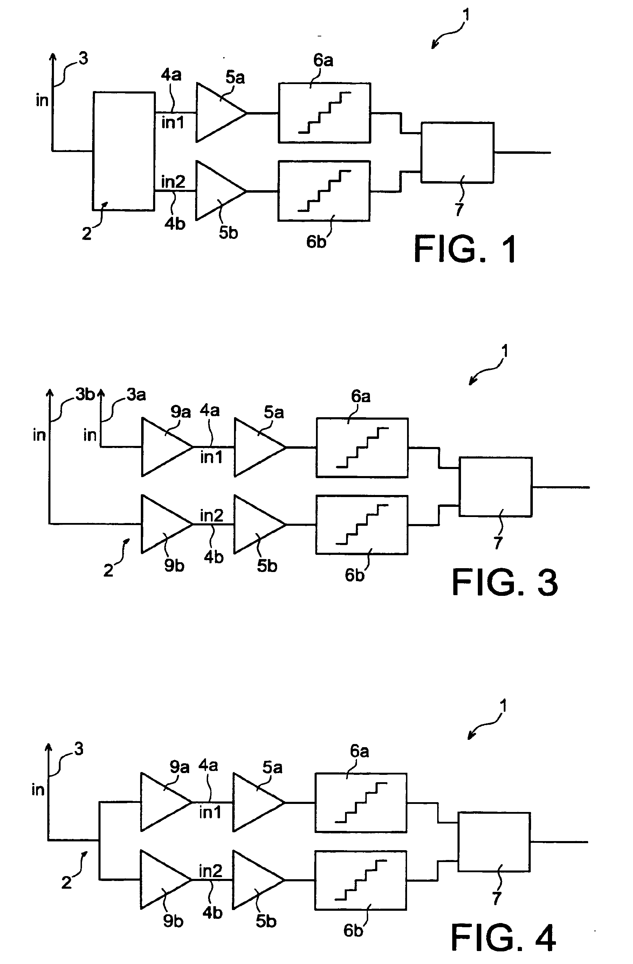

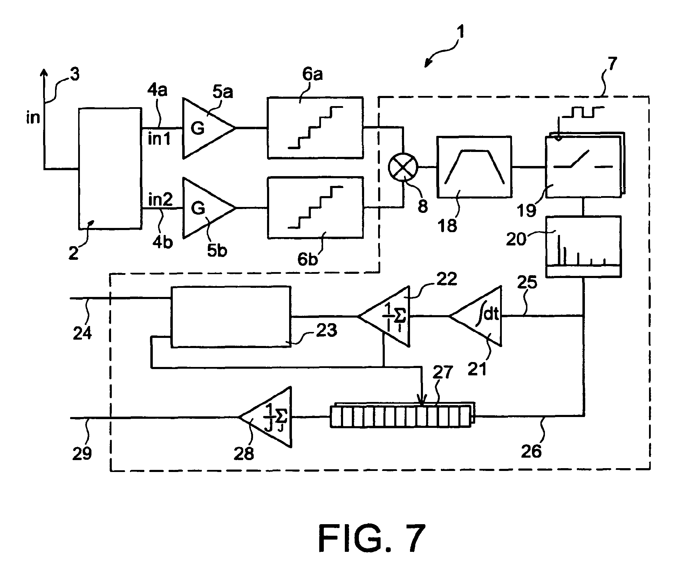

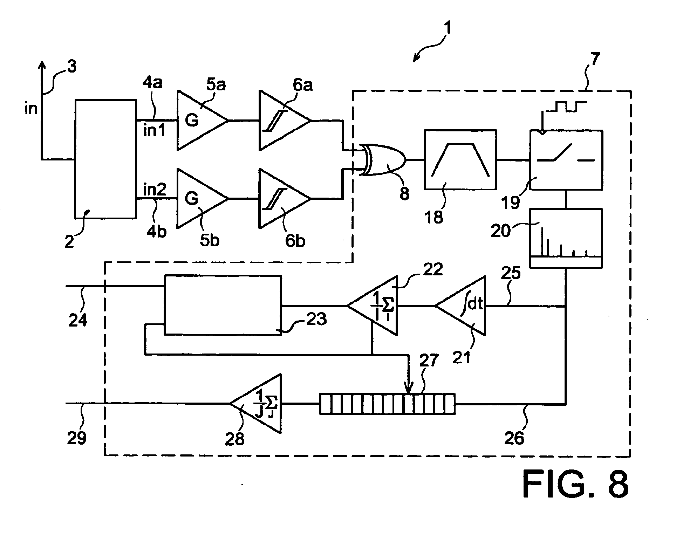

On se réfère tout d'abord à la figure 1 qui représente un exemple de schéma de principe de la chaîne de réception 1, objet de la présente invention. Cette chaîne de réception 1 comporte une interface d'entrée 2 réalisant la réception d'un signal, par exemple par une antenne 3, et la transformation du signal reçu, ici en deux signaux corrélés. Chacun des signaux corrélés est réparti sur une voie 4a, 4b. La chaîne de réception 1 comporte également des moyens d'amplification 5a, 5b et des moyens de conversion analogique-numérique 6a, 6b. La chaîne de réception 1 pourrait également ne pas comporter ces moyens d'amplification 5a, 5b. La conversion de chaque signal corrélé peut être réalisée sur 1 bit ou sur plusieurs bits. La conversion réalisée peut être asynchrone, permettant ainsi de ne pas effectuer d'échantillonnage à ce niveau de la chaîne de réception 1. La chaîne de réception 1 comporte enfin des moyens de traitement numérique 7 des signaux convertis comportant au moins des moyens d'opérations 8, représentés sur les figures 7 et 8, entre lesdits signaux convertis.

Dans la chaîne de réception 1 de la figure 1, la partie analogique est limitée à l'interface d'entrée 2 et aux moyens d'amplification 5a, 5b. Ainsi, en réalisant de nombreuses fonctions de la chaîne de réception 1 de manière numérique, on réduit notablement la consommation de la chaîne de réception 1.

Dans cet exemple de la figure 1, un signal in est reçu par l'antenne 3. Ce signal est alors transformé en deux signaux corrélés par l'interface d'entrée 2 : in1 et in2. Lorsque in1 et in2 sont en phase, on a alors :

$$\texttt{in = in1 = in2}$$

Lorsque in1 et in2 sont en opposition de phase, on a alors :

$$\texttt{in = in1 = -(in2) ou in = in2 = -(in1)}$$

Les moyens d'amplification, ici des cellules de gain 5a, 5b, permettent d'amplifier ensuite ces deux signaux. L'amplification réalisée peut être non linéaire (par exemple avec saturation) permettant ainsi à la chaîne de réception 1 de ne pas réaliser de contrôle de gain d'amplification. Les cellules 5a, 5b permettent d'amener les deux signaux in1 et in2 dans la dynamique de fonctionnement de l'étage suivant, c'est-à-dire la conversion analogique-numérique. Cette conversion analogique-numérique peut être réalisée sur 1 ou plusieurs bits.

Enfin, en bout de chaîne, des moyens de traitement numérique 7, par exemple un DSP (Digital Signal Processor en anglais, ou processeur de signal numérique) traitent et démodulent les informations reçues. Un exemple de traitement numérique simple est la multiplication numérique des voies in1 et in2 pour obtenir l'énergie du signal. Le produit des voies in1 et in2 permet d'obtenir :

$$\texttt{in1 * in2 = in²}$$

Le carré du signal reçu in représente sa puissance instantanée. L'intégrale de cette puissance instantanée représente l'énergie du signal.

L'utilisation de plusieurs voies 4a, 4b pour l'amplification et la conversion numérique permet de réduire la contribution du bruit de l'électronique dans le résultat obtenu (d'un facteur $\sqrt{2}$ dans le cas de deux voies) et de supprimer un biais continu sur la valeur de la puissance. En effet, dans une chaîne de réception à une voie, un bruit N (bruit gaussien d'écart type $\sigma$) est introduit sur la voie par l'électronique de la chaîne. On a alors sur la voie le signal in et le bruit N. Lorsque l'on effectue le produit du signal par lui-même, on obtient :

$$in^2 + 2.in.N + N^2$$

Lorsque deux voies sont utilisées, on obtient in1 + N1 sur la première voie 4a et in2 + N2 sur la seconde voie 4b (avec N1 et N2 bruits gaussiens). Lorsque l'on effectue le produit des deux signaux, on obtient :

$$in^2 + in.(N1 + N2) + N1.N2$$

Or, les deux voies 4a, 4b étant des parties électroniques distinctes, les bruits N1 et N2 ne sont pas corrélés, même s'ils ont le même écart type σ. Le terme in. (N1 + N2) peut alors se ramener à $\sqrt{2}.in.N,$ ce qui est plus faible de $\sqrt{2}$ que le résultat obtenu avec une chaîne de réception à une voie. De plus, dans le cas à deux voies, le terme N1.N2 peut se ramener à un bruit d'écart type $\sigma^2$, tandis que dans le cas à une voie, il peut être montré que le terme $N^2$ est formé d'une moyenne non nulle (biais d'ailleurs défavorable), ainsi que d'une partie variable dont l'écart type vaut $\sqrt{2}.\sigma^2.$ Ce résultat est comparable à celui obtenu par les structures différentielles classiques, mais dans cette invention, les signaux ne sont pas nécessairement en opposition de phase.

De plus, il n'est pas possible de réaliser sur une seule voie une détection d'énergie par le produit de données numériques qui seraient seulement sur 1 bit. Ceci est possible avec au moins deux voies, grâce à l'utilisation du bruit, ce que ne permettent pas les structures différentielles classiques.

L'avantage principal de l'invention réside dans sa simplicité. Cela est particulièrement vrai lorsque le nombre de voies est limité à deux et lorsque la conversion analogique-numérique 6a, 6b est réalisée sur 1 seul bit par un seul comparateur asynchrone par voie, comme sur la figure 8. Dans ce cas, le traitement numérique 7 consistant à faire le produit des voies, peut se ramener à une simple porte OU exclusif si les signaux sont en opposition de phase, ou une porte NON OU exclusif si les signaux sont en phase. De plus, dans le cas d'une conversion 6a, 6b sur 1 bit, l'amplification 5a, 5b, qui est en tête de la chaîne de réception 1, n'a besoin que d'un gain constant simplement défini par l'hystérésis du comparateur (plus petit signal détectable).

Un autre avantage de l'invention est la plus faible contribution en bruit de la chaîne de réception 1 par rapport à une chaîne ne faisant intervenir qu'une seule voie. Grâce à la simplification notamment de la partie analogique, la présence de la deuxième voie n'apporte qu'un modeste excès de consommation relativement à l'ensemble de la chaîne.

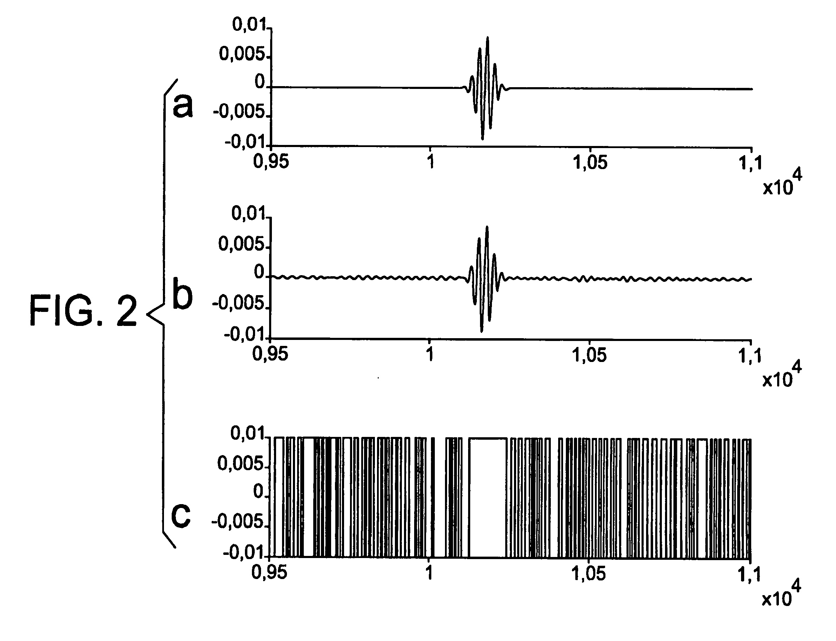

La figure 2 représente un signal a) UWB impulsionnel et un signal b) UWB impulsionnel auquel un bruit présent sur une voie de la chaîne de réception 1 est ajouté. Par analogie avec ce qui a été décrit précédemment, le signal a) représente le signal in, et le signal b) représente le signal in + N. Le signal c) est la sortie d'un NON OU exclusif avec, sur sa première entrée, un signal in1 = in + N1, et sur sa deuxième entrée, in2 = in + N2. Le signal c) est bien le produit de ces deux signaux, donc la puissance instantanée in1 * in2. On voit avec le signal c) que la puissance instantanée en sortie est constituée de bruit quant le signal est absent, et d'un niveau logique 1 pendant une impulsion sur le signal b). Si le bruit était absent, la sortie serait toujours à « 1 » car les signaux des deux voies seraient identiques, en phase ou en opposition de phase.

Il est également possible que les moyens de traitement numérique 7 ne réalisent pas une multiplication, mais une addition des voies lorsque les signaux sont en phases. Cette opération d'addition permet de diminuer le bruit sans modifier le signal in initialement reçu. Si n voies sont utilisées, en notant $V_i(t)$ le signal numérisé se trouvant sur la voie i, on obtient alors le signal :

$$S(t) = \sum_{i=1}^{n} V_i(t)$$

Le bruit est ainsi réduit d'un facteur $\sqrt{n}.$

Lorsque le signal reçu est par exemple réparti sur deux voies et que les signaux sont en opposition de phase, il est également possible de réaliser une soustraction de ces deux voies, telle que :

$$S(t) = V_1(t) - V_2(t)$$

Cette opération permet de reproduire une réception en mode différentiel, c'est-à-dire calculer le signal différentiel initial entre deux voies. En reproduisant ce type de réception, le bruit de mode commun, c'est-à-dire tout signal parasite présent en phase sur chacune des voies, est réduit ou annulé.

Il est également possible de réaliser une combinaison linéaire des voies, telle que :

$$S(t) = \sum_{i=1}^{n} a_i . V_i(t)$$

où $a_i$ sont les coefficients de la combinaison linéaire.

Cette opération est une généralisation des opérations d'addition et de soustraction qui sont complétées d'un coefficient multiplicatif qui peut être différent pour chacune des voies. Par exemple, il peut être intéressant pour limiter la dynamique du signal numérique de diviser l'addition de n voies d'un facteur n. Il peut également être intéressant, lorsque l'on a 2n voies avec n voies $V_i$ transportant le signal en phase et n voies $V_j$ transportant le signal en opposition de phase, de réaliser la combinaison linéaire :

$$S(t) = \sum_{i=1}^{n} . V_i(t) + \sum_{j=1}^{n} . (-1) . V_j(t)$$

Ainsi, on réalise l'addition des n voies $V_i$ et des n voies $V_j$ pour réduire le bruit, et ensuite on soustrait les deux sommes comme en mode différentiel pour retrouver le signal différentiel initial.

Il est aussi possible de réaliser une opération d'égalisation des voies telle que :

$$S(t) = \sum_{i=1}^{n} a_i . V_i(t + \tau_i)$$

où $a_i$ sont les coefficients de la combinaison linéaire et $\tau_i$ sont des éléments de retard associés à chaque voie.

Cette opération est généralement utilisée sur une seule voie afin de compenser les effets d'affaiblissement très préjudiciables dans la propagation des ondes radio. Cette opération est ici généralisée à n voies car les bruits des voies restent non corrélés entre eux au cours du temps. Ici, différents retards sont associés à chacune des voies puis une combinaison linéaire est réalisée entre les voies. Là encore, on réduit également le bruit présent.

Nous allons maintenant décrire les différentes interfaces d'entrée 2 possibles de la chaîne de réception 1, objet de la présente invention.

La figure 3 représente une chaîne de réception 1, objet de la présente invention, comportant un premier exemple d'interface d'entrée 2. La chaîne de réception 1 de la figure 3 est une chaîne à deux voies 4a, 4b. Ici, il s'agit d'une interface par duplication de l'antenne. Dans cette solution, le signal est capté par deux antennes identiques 3a, 3b. On suppose ainsi que les signaux d'entrée des deux voies 4a, 4b sont suffisamment proches l'un de l'autre pour être considérés égaux en phase. La chaîne de réception 1 est donc considérée ici comme non-différentielle. Cette interface d'entrée 2 comporte également deux amplificateurs faible bruit 9a, 9b, chacun disposé sur une voie 4a, 4b en amont des amplificateurs 5a et 5b.

Les avantages de cette réalisation résident dans la simplicité de l'interface d'entrée 2. Les amplificateurs faible bruit 9a, 9b sont classiques et adaptés chacun à une antenne 3a, 3b, par exemple d'impédance de 50 Ohms. Chaque voie 4a, 4b ayant son antenne 3a, 3b, cette solution présente un gain en puissance du signal d'un facteur deux par rapport à une solution mono antenne. De plus, il n'y a pas de bruit de mode commun (bruit corrélé associé à l'entrée de chaque voie), mais seulement du bruit de voie (c'est-à-dire les bruits non corrélés de chacune des voies) comprenant éventuellement une partie non corrélée captée par les antennes, ainsi que du bruit commun (bruit associé au signal capté) issu du canal de propagation et des couplages internes au circuit.

La réalisation du couple d'antennes est parfaitement appariée. Ainsi, les deux signaux captés sont identiques en amplitude et surtout en phase, quelle que soit l'orientation des antennes. Dans cet exemple d'interface d'entrée 2, le bruit commun issu des couplages internes au circuit n'est pas rejeté.

La figure 4 représente une chaîne de réception 1, objet de la présente invention, comportant un second exemple d'interface d'entrée 2. Ici, il s'agit d'une interface par duplication du signal d'entrée. La chaîne de réception 1 de la figure 4 est une chaîne à deux voies 4a, 4b. Dans cette solution, le signal est capté par une seule antenne 3 mais attaque directement deux amplificateurs faible bruit 9a, 9b, chacun sur une des deux voies 4a, 4b. Ces amplificateurs 9a, 9b sont séparés l'un de l'autre mais associés, c'est à dire qu'ils présentent une impédance d'entrée adaptée à l'antenne 3. Par exemple, si l'impédance de l'antenne 3 est de 50 Ohms, chaque amplificateur 9a, 9b a une impédance de 100 Ohms. Les signaux d'entrée des deux voies 4a, 4b sont identiques par nature puisque issus de la même antenne 3.

Les avantages de cette solution sont la simplicité de l'électronique et l'absence de bruit de mode commun. Mais la puissance du signal est abaissée d'un facteur deux, dû à la répartition d'un signal sur deux voies. Par rapport à la solution double antenne 3a, 3b représentée sur la figure 3, la perte est d'un facteur quatre, mais cette perte peut être compensée par une conception judicieuse des amplificateurs faible bruit 9a, 9b (impédance d'entrée, mode tension plutôt que puissance, etc.). Comme pour la double antenne 3a, 3b, le bruit commun issu des couplages internes au circuit n'est pas rejeté.

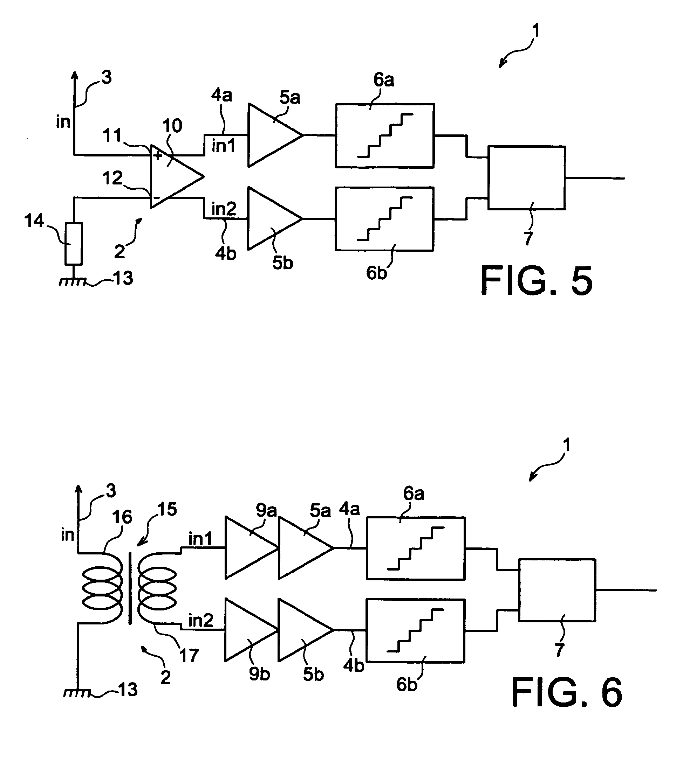

La figure 5 représente une chaîne de réception 1, objet de la présente invention, comportant un troisième exemple d'interface d'entrée 2. Ici, il s'agit d'une interface différentielle par amplificateur. La chaîne de réception 1 de la figure 5 est une chaîne à deux voies 4a, 4b. Dans cette solution, le mode de fonctionnement est pseudo différentiel dans la mesure où les signaux d'entrée des voies 4a, 4b sont en opposition de phase. A cet effet, un amplificateur faible bruit différentiel 10 est utilisé. L'amplificateur faible bruit différentiel 10 comporte une entrée positive 11 et une entrée négative 12. L'antenne 3 est reliée à l'entrée positive 11 tandis qu'un potentiel nul, par exemple une masse 13 est reliée à l'entrée négative 12. Cette solution permet, avec une seule antenne 3, d'obtenir un mode de fonctionnement qui rejette la majeure partie du bruit de mode commun, en particulier si la masse 13 est reliée à l'entrée négative 12 de l'amplificateur différentiel 10 par l'intermédiaire d'une impédance 14 qui reproduit l'impédance équivalente de l'antenne 3. Ce troisième exemple d'interface d'entrée 2, plus complexe que les deux premiers à cause de la structure différentielle de l'amplificateur faible bruit 10, a un bruit de mode commun issu de l'électronique de l'amplificateur faible bruit 10. Ce bruit n'est rejeté qu'en partie lors du calcul de l'énergie.

La figure 6 représente une chaîne de réception 1, objet de la présente invention, comportant un quatrième exemple d'interface d'entrée 2. Ici, il s'agit d'une interface différentielle par transformateur balun. La chaîne de réception 1 de la figure 6 est une chaîne à deux voies 4a, 4b. Dans cette solution, comme pour le troisième exemple d'interface d'entrée 2 de la figure 5, le mode de fonctionnement est pseudo différentiel dans la mesure où les signaux d'entrée des voies 4a, 4b sont en opposition de phase. Le passage en différentiel est réalisé par un transformateur balun 15 qui est de préférence intégré au circuit s'il y a peu de pertes. Le primaire 16 du balun 15 est relié entre l'antenne 3 et la masse 13 tandis que le secondaire 17 fournit deux signaux en opposition de phase.

Là encore, une seule antenne 3 est nécessaire et son mode de fonctionnement rejette la majeure partie du bruit de mode commun, en particulier si la masse 13 est reliée au primaire 16 du balun 15 par l'intermédiaire d'une impédance 14 qui reproduit l'impédance équivalente de l'antenne, comme cela est représenté sur la figure 5. Cette solution permet en plus un fonctionnement des amplificateurs 9a, 9b en mode tension en modifiant le rapport du nombre de spires du balun entre le primaire 16 et le secondaire 17. Les amplificateurs 9a, 9b passent en mode tension lorsque leurs impédances d'entrée deviennent supérieures à l'impédance caractéristique (par exemple 50 Ohms). Un amplificateur n'ayant qu'une faible capacité parasite comme impédance d'entrée fonctionne en mode tension. C'est le cas des amplificateurs classiques en technologie CMOS. Ainsi, une impédance élevée au niveau de l'entrée des amplificateurs 9a, 9b peut être vue à travers le balun 15 comme une impédance adaptée à l'antenne (50 Ohms par exemple). Il n'est pas nécessaire que les amplificateurs faible bruit 9a, 9b soient différentiels. Comme le balun est un élément passif, cette solution ne produit pas de bruit de mode commun. Cette réalisation est plus complexe que les précédentes et une perte du signal reçu due aux pertes du balun 15, en particulier si celui-ci est intégré au circuit, peut apparaître.

On considère maintenant la figure 7 qui représente une chaîne de réception 1 de signaux, objet de la présente invention, selon un premier mode de réalisation. Ici, comme sur la figure 1, la chaîne de réception 1 comporte une interface d'entrée 2, pouvant être l'une représentée sur les figures 3 à 6, un amplificateur 5a, 5b, par exemple à gain constant, sur chacune des deux voies 4a, 4b, un convertisseur N bits 6a, 6b sur chaque voie 4a, 4b.

Des moyens de traitement numérique 7 comportent par exemple un multiplicateur 8 réalisant la multiplication des signaux convertis numériquement, fournissant la puissance instantanée du signal reçu, appelée signal de puissance instantanée. Ici, les moyens de traitement numérique 7 comportent également des éléments supplémentaires au multiplicateur 8 : la chaîne de réception 1 de la figure 7 fournit à la fois les données transmises mais également la mesure du temps d'arrivée des impulsions de codage des données. En effet, les propriétés des transmissions UWB impulsionnelles permettent de connaître le temps de propagation entre les émetteurs et les récepteurs et donc de mesurer la distance qui les sépare avec une bonne précision (environ quelques dizaines de centimètres). La chaîne de réception 1 de la figure 7 permet cette mesure du temps d'arrivée des impulsions.

Après la conversion analogique-numérique asynchrone 6a, 6b, le produit des voies 4a, 4b fournit la puissance instantanée du signal. Son spectre se trouve alors en basses fréquences par rapport au signal reçu, sur une bande dont la largeur est égale à la moitié de la largeur de la bande initiale.

Un filtre passe-bande 18 permet de supprimer la partie du spectre proche de la fréquence d'échantillonnage, c'est à dire couper les fréquences du signal de puissance instantanée qui sont au-delà de la moitié de la fréquence d'échantillonnage afin de respecter le critère de Shannon. Par exemple, une impulsion UWB typique possède une largeur de bande de 1 GHz centrée autour de f = 4GHz. Après la réalisation du produit des voies 4a, 4b, le signal se trouve concentré sur une bande de fréquence comprise entre 0 et 500 MHz ainsi que sur une bande de 500 MHZ située vers 8 GHz. En utilisant alors un filtre passe-bande dont la bande passante de 500 MHz est centrée autour de 250 MHz, on conserve alors uniquement le signal situé dans la bande de fréquences comprise entre O et 500 MHz. La coupure basse du filtre peut être réalisée très proche de 0, par exemple vers 1 MHz. Il permet également de supprimer la composante continue du signal qui contient un biais issu du bruit commun. Ce filtre 18 peut être réalisé soit de façon analogique, une seconde numérisation étant réalisée alors après le filtrage, soit de façon numérique en utilisant des fonctions logiques asynchrones (portes et retards) comme cela est représenté sur la figure 7, après le multiplicateur 8.

Un échantillonnage 19 est ensuite réalisé après le filtrage passe-bande 18. Cet échantillonnage 19 n'est pas réalisé plus en amont dans le chaîne de réception 1 car il peut se faire à une fréquence beaucoup plus basse sur la puissance instantanée que sur le signal initialement reçu. Par exemple, un signal UWB centré sur 4 GHz ayant 2 GHz de bande devra être échantillonné à 10 GHz minimum, tandis que sa puissance se trouvant entre O et 1 GHz ne devra être échantillonnée qu'à 2 GHz seulement pour respecter le critère de Shannon.

Après échantillonnage, un filtrage adapté dynamiquement optionnel 20 a pour but de diminuer le bruit du signal de puissance instantanée. Il est efficace dans des environnements difficiles. Ces environnements ont un canal de propagation des ondes dans lequel l'impulsion initiale subit de multiples trajets, réflexions et atténuations. Le signal RF capté par le récepteur n'est alors plus formé d'une unique et forte impulsion mais de nombreuses impulsions moins puissantes et étalées dans le temps (plusieurs dizaines de nanosecondes). La transformation, par le canal, de l'impulsion émise en impulsions reçues, s'appelle réponse du canal. Ce filtre peut par exemple est un filtre à Réponse Impulsionnelle Finie (RIF). Afin de caractériser ce filtre, on réalise une étape d'apprentissage du canal, en faisant par exemple la moyenne des réponses du canal déjà reçues. A partir de cette réponse « type », on détermine alors les coefficients du filtre.

Après ce filtrage 20, les signaux prennent deux voies : une servant pour la communication, c'est-à-dire la réception de données transmises (voie 25), et l'autre pour la localisation de l'émetteur par rapport au récepteur (voie 26).

Comme la voie de communication 25 a moins besoin de précision temporelle que la voie de localisation 26, cette voie 25 comporte un premier filtrage réalisé par un filtre intégrateur 21 qui a pour but de calculer l'énergie du signal reçu à partir de la puissance instantanée du signal reçu. Comme son nom l'indique, le filtre 21 réalise une intégration du signal reçu en entrée. Ce filtre 21 se caractérise par son paramètre k qui représente le facteur de réduction du nombre d'échantillons. k échantillons consécutifs sont alors sommés pour n'en former qu'un. Le filtre 21 diminue le nombre d'échantillons par k dans le but d'améliorer les performances en consommation, et permet de réduire le bruit avant démodulation. Si D est la dynamique des échantillons en entrée, les échantillons en sortie auront une dynamique égale à k.D. Il existe une valeur k optimale en fonction du type du canal sur lequel est utilisé le filtre intégrateur 21.

Un deuxième filtre 22, réalisant des intégrations cohérentes, va à son tour réduire le bruit pour pouvoir démoduler correctement le signal obtenu. Les intégrations cohérentes représentent le filtrage ultime de la chaîne de réception 1. Elles sont utilisées lorsque le signal reçu est faible par rapport au bruit et que malgré les filtrages précédents, le bruit reste trop important pour démoduler le signal, ou mesurer le temps d'arrivée des impulsions. La mesure du temps, à cause de la précision demandée, est en général plus sensible au bruit que la démodulation. Les intégrations cohérentes reposent sur l'augmentation de la quantité de signal par rapport au bruit par répétition de l'impulsion émise plutôt que par augmentation de sa puissance. La répétition des impulsions (par exemple R fois) se fait au rythme de la Période de Répétition des impulsions (PRP), à charge pour le récepteur de faire la somme des R signaux reçus sur la profondeur de la PRP, échantillon par échantillon. Les sommes se font en synchronisation avec la PRP et fournissent une réponse impulsionnelle de la longueur de la PRP. Comme le bruit est à priori non corrélé entre deux impulsions, les intégrations cohérentes permettent de le réduire d'un facteur $\sqrt{R}$. La stabilité des bases de temps entre l'émetteur et le récepteur tout au long des R répétitions est la condition pour que ce filtrage soit efficace. C'est l'aspect cohérence de l'intégration. Si les impulsions font, par exemple, 1 ns de largeur et que les bases de temps dérivent entre elles de 1 ns entre deux émissions, chaque impulsion se retrouve dans le bruit de l'autre. La somme des deux signaux reçus avec ce décalage ne permet alors plus d'augmenter le signal par rapport au bruit. La précision relative des bases de temps nécessaire entre émetteur et récepteur peut être de l'ordre de quelques parties par million (ppm). Un mécanisme de compensation des dérives relatives peut être alors nécessaire.

Enfin, la dernière étape de la chaîne de réception 1 pour obtenir les données transmises consiste à réaliser une démodulation et une synchronisation 23 du signal.

Les modulations possibles à partir de la mesure d'énergie sont l'OOK (On Off Keying en anglais, ou modulation tout ou rien) et la modulation PPM (Pulse Position Modulation en anglais, ou modulation d'impulsions en position). La modulation OOK consiste à envoyer une impulsion sur un niveau logique de la donnée à transmettre et ne rien envoyer sur l'autre niveau logique. Le démodulateur doit juste détecter la présence ou l'absence des impulsions pour reconstituer les données. Dans le cas de la modulation PPM, la période de répétition des impulsions (PRP) est découpée en tranches temporelles. Une impulsion est envoyée dans une des tranches temporelles d'une PRP en fonction des valeurs numériques à transmettre. Pour la PPM, le démodulateur doit lui aussi découper la PRP en tranches et détecter dans quelle tranche se trouve l'impulsion.

Quelle que soit la modulation choisie, la démodulation est en synchronisation avec la PRP des impulsions émises afin de détecter la présence des impulsions dans des laps de temps attendus. La synchronisation est effectuée à intervalles réguliers par l'envoi de séquences prédéterminées d'impulsions que le récepteur peut facilement reconnaître et décoder. La répétition des séquences de synchronisation dépend du temps que le système peut se permettre de perdre avant de se synchroniser. On a alors en sortie 24 des moyens de démodulation et de synchronisation 23 les données de communication transmises à la chaîne de réception 1.

La voie 26 pour la localisation a besoin de son côté de la plus grande précision temporelle possible afin d'obtenir la plus grande précision de localisation possible. La mesure du temps d'arrivée des impulsions peut être faite sur le signal de puissance instantanée échantillonné à la même fréquence que sur la voie de communication 25. La synchronisation étant déjà établie, des moyens de sélection 27 ne sélectionnent que les échantillons consécutifs qui contiennent vraisemblablement le signal. Les moyens 27 recherchent alors la première impulsion propagée correspondant au trajet de transmission le plus court. Le comptage des échantillons à partir de la synchronisation sur la PRP jusqu'à ce premier signal permet de fournir un temps relatif en nombre de période d'horloge. Cette mesure repose sur la précision de la synchronisation préalable ainsi que sur la précision de la période d'échantillonnage du signal de puissance instantanée. Sur la figure 7, un filtre 28 réalisant des intégrations cohérentes, similaire au filtre 22 de la voie 25 de la communication permet à son tour de réduire le bruit jusqu'à atteindre un niveau acceptable pour détecter l'échantillon contenant l'impulsion incidente à la première impulsion propagée. La précision est donc donnée par la période de l'horloge d'échantillonnage se trouvant dans les moyens d'échantillonnage 19. Le temps d'arrivée des impulsions est délivré sur la sortie 29.

La démodulation ayant lieu en même temps que la mesure du temps, il est possible d'échantillonner, ou de garder, uniquement la partie du signal qui contient vraisemblablement la première impulsion propagée. Pour cela, on considère tout d'abord l'échantillon à partir duquel la démodulation a pu s'opérer lors de précédents cycles PRP comme un « pointeur prédictif ». A partir de ce pointeur prédictif, on considère alors une fenêtre temporelle de N échantillons antérieurs et on ne garde que ces échantillons pour les prochaines PRP.

Les phases de synchronisation peuvent être mises à profit pour enregistrer la réponse du canal dans une mémoire du récepteur, non représentée. Par la suite, lorsqu'il s'agit de démoduler ou de mesurer le temps d'arrivée des impulsions, la réponse du canal mise en mémoire peut être utilisée par le filtre 20 pour filtrer le signal énergie grâce à une convolution. Plus la réponse du canal est étalée plus le filtrage est efficace. Dans la mesure où le canal reste inchangé entre son évaluation et son utilisation, on peut dire que ce filtrage est adapté au canal. D'autre part, si les phases d'évaluation du canal se répètent suffisamment souvent par rapport aux modifications qui peuvent survenir sur celui-ci (déplacements et mouvements), on peut dire que ce filtrage est dynamique.

La figure 8 représente une chaîne de réception 1 de signaux, objet de la présente invention, selon un second mode de réalisation. Par rapport à la chaîne de réception 1 de la figure 7, la conversion analogique-numérique est réalisée ici par des comparateurs asynchrones sur 1 bit. Les signaux étant ici en opposition de phase, une multiplication des signaux convertis est ensuite réalisée par une simple porte OU exclusif car on considère que la donnée sur 1 bit représente le signe du signal. Dans ce second mode de réalisation, le filtre d'échantillonnage fournissant également une donnée sur 1 bit, les moyens d'échantillonnage 19 peuvent être réalisés par une simple bascule D.

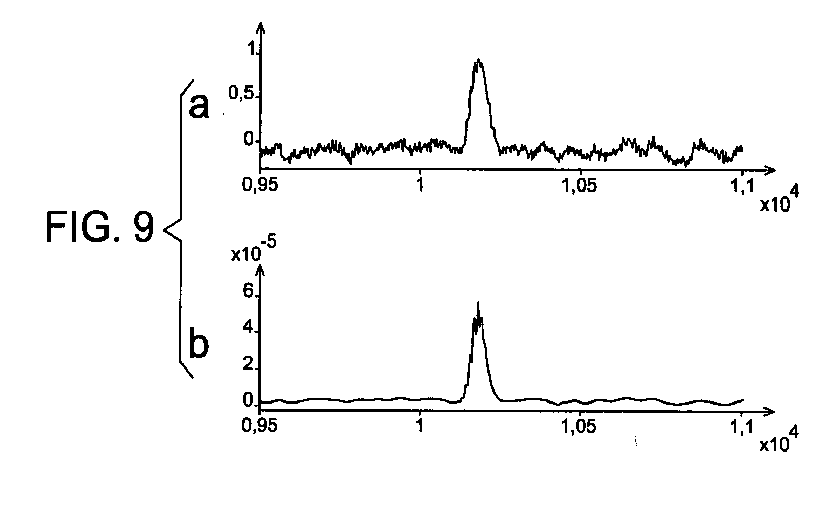

Choisir une conversion des signaux sur 1 bit permet de simplifier la conception de la chaîne de réception 1. Toutefois, une conversion sur 1 bit implique un bruit plus important sur le signal filtré par rapport à un signal converti numériquement sur plusieurs bits. La figure 9 représente graphiquement le signal en sortie du filtre 18. Le signal a) représente un signal converti sur 1 bit et le signal b) représente un signal converti sur plusieurs bits. On voit que, à filtrage égal, il y a plus de bruit sur le signal filtré lorsqu'il est numérisé sur 1 bit que sur un signal filtré lorsqu'il est numérisé sur plusieurs bits. Par exemple, dans une chaîne à N bits, où N tend vers l'infini, le bruit est inférieur de 6 dB par rapport au bruit présent dans une chaîne à 1 bit.

Dans les deux exemples de réalisation présentés sur les figures 7 et 8, seules deux voies 4a, 4b sont utilisées. Il est également possible d'utiliser plus de deux voies. Les performances sont alors améliorées dans le cas où plus de deux voies sont utilisées, mais la consommation du récepteur est plus importante. En extrapolant à N voies, l'amélioration en bruit suit approximativement une loi en racine carré de N. Il faut alors choisir un bon équilibre entre l'amélioration du bruit résultant de l'augmentation du nombre de voies et l'augmentation de la complexité et de la consommation qui en découle.

Cette invention pourra être utilisée dans toutes les applications concernant les communications sans fil courte portée (quelques dizaines de mètres) de type UWB. Elle peut avantageusement remplacer la partie analogique des récepteurs existants qui utilisent l'énergie des impulsions. Il n'est cependant pas exclu de récupérer d'autres caractéristiques des signaux dans la mesure où ces grandeurs peuvent être déduites de la combinaison des signaux issus d'au moins deux voies d'amplification indépendantes. Le système pourra également être utilisé dans le cas de signaux à bande plus étroite.

L'invention a également de nombreuses applications de mesure de la distance, la localisation et même le déplacement (mesure de la vitesse) d'un émetteur-récepteur. Les propriétés basse consommation doivent permettre de réaliser des dispositifs portables alimentés par piles ou batterie. Les applications peuvent être très variées dans des domaines tels que la télémétrie ou la surveillance du déplacement des personnes et des biens dans les locaux ou les transports.

**Revendications**

1. Chaîne de réception (1) de signaux comportant :

   - une interface d'entrée (2) réalisant la réception d'un signal et la transformation du signal reçu en au moins deux signaux corrélés en phase ou en opposition de phase, chacun des signaux corrélés étant réparti sur au moins une voie (4a, 4b), les voies (4a, 4b) étant identiques,
   - des moyens de conversion analogique-numérique (6a, 6b) sur 1 bit des signaux corrélés en phase ou en opposition de phase, sur chacune des voies (4a, 4b),
   - des moyens de traitement numérique (7) des signaux convertis issus desdites voies (4a, 4b), comportant au moins des moyens d'opérations (8) entre lesdits signaux convertis en phase ou en opposition de phase,

   les voies (4a, 4b) étant des parties électroniques distinctes introduisant des bruits non corrélés sur chacune des voies (4a, 4b), et les moyens d'opérations (8) comportant des moyens de multiplication, ou des moyens d'addition lorsque lesdits signaux convertis sont en phase, ou des moyens de soustraction lorsque lesdits signaux convertis sont en opposition de phase, ou les moyens d'opérations (8) réalisant au moins une combinaison linéaire ou une égalisation des signaux convertis.

2. Chaîne de réception (1) de signaux selon la revendication 1, comportant en outre des moyens d'amplification (5a, 5b).

3. Chaîne de réception (1) de signaux selon la revendication 2, les moyens d'amplification (5a, 5b) étant disposés entre l'interface d'entrée (2) et les moyens de conversion analogique-numérique (6a, 6b).

4. Chaîne de réception (1) de signaux selon l'une quelconque des revendications 2 ou 3, les moyens d'amplification (5a, 5b) réalisant une amplification linéaire ou non linéaire, telle une amplification avec saturation.

5. Chaîne de réception (1) de signaux selon l'une quelconque des revendications 2 à 4, les moyens d'amplification (5a, 5b) ayant un gain constant.

6. Chaîne de réception (1) de signaux selon l'une des revendications précédentes, les moyens de multiplication (8) comportant au moins une porte OU exclusif lorsque le signal reçu est transformé en deux signaux corrélés.

7. Chaîne de réception (1) de signaux selon la revendication 6, la sortie de la porte OU exclusif des moyens de multiplication (8) étant une sortie inverseuse lorsque les deux signaux corrélés sont en phase.

8. Chaîne de réception (1) de signaux selon l'une quelconque des revendications précédentes, les moyens de conversion analogique-numérique (6a, 6b) étant asynchrones.

9. Chaîne de réception (1) de signaux selon l'une quelconque des revendications précédentes, les moyens de conversion analogique-numérique (6a, 6b) comportant au moins un comparateur.

10. Chaîne de réception (1) de signaux selon l'une quelconque des revendications précédentes, l'interface d'entrée (2) comportant au moins une antenne (3).

11. Chaîne de réception (1) de signaux selon l'une quelconque des revendications précédentes, l'interface d'entrée (2) comportant au moins une antenne (3a, 3b) pour chacune des voies (4a, 4b).

**12.** Chaîne de réception (1) de signaux selon l'une quelconque des revendications 1 à 10, l'interface d'entrée (2) répartissant le signal reçu sur chacune des voies (4a, 4b).

**13.** Chaîne de réception (1) de signaux selon la revendication 10, l'interface d'entrée (2) comportant au moins un amplificateur différentiel faible bruit (10) comprenant au moins deux entrées différentielles (11, 12), la première (11) étant reliée à l'antenne (3) et la seconde (12) à un potentiel nul (13), tel une masse, et au moins une sortie pour chacune des voies (4a, 4b).

**14.** Chaîne de réception (1) de signaux selon la revendication 13, la seconde entrée différentielle (12) étant reliée au potentiel nul (13) par l'intermédiaire d'au moins une impédance (14).

**15.** Chaîne de réception (1) de signaux selon la revendication 10, l'interface d'entrée (2) comportant au moins un transformateur balun (15) comprenant un primaire (16) relié entre l'antenne (3) et un potentiel nul (13), tel une masse, et un secondaire (17) relié aux voies (4a, 4b).

**16.** Chaîne de réception (1) de signaux selon la revendication 15, le primaire (16) étant relié au potentiel nul (13) par l'intermédiaire d'au moins une impédance (14).

**17.** Chaîne de réception (1) de signaux selon l'une quelconque des revendications 14 ou 16, l'impédance (14) étant égale à l'impédance équivalente de l'antenne (3).

**18.** Chaîne de réception (1) de signaux selon l'une quelconque des revendications précédentes, l'interface d'entrée (2) comportant au moins un amplificateur faible bruit (9a, 9b).

**19.** Chaîne de réception (1) de signaux selon l'une quelconque des revendications précédentes, les moyens de traitement numérique (7) comportant, après les moyens d'opérations (8), des moyens de filtrage (18), tel un filtre passe bande, et/ou des moyens d'échantillonnage (19), et/ou des moyens de filtrage adaptés dynamiquement (20).

**20.** Chaîne de réception (1) de signaux selon l'une quelconque des revendications précédentes, les moyens de traitement numérique (7) comportant, après les moyens d'opérations (8), une voie (25) de communication pour un traitement des données transmises et une voie (26) de localisation pour mesurer une distance qui sépare la chaîne de réception d'un émetteur du signal reçu.

**21.** Chaîne de réception (1) de signaux selon l'une quelconque des revendications précédentes, les moyens de traitement numérique (7) comportant, pour le traitement des données transmises, au moins un filtre intégrateur (21), et/ou au moins un filtre d'intégrations cohérentes (22), et/ou des moyens de démodulation et de synchronisation (23).

**22.** Chaîne de réception (1) de signaux selon l'une quelconque des revendications précédentes, les moyens de traitement numérique (7) comportant, pour mesurer une distance séparant la chaîne de réception (1) d'un émetteur du signal reçu, des moyens de sélection (27) d'échantillons du signal reçu, et/ou au moins un filtre d'intégrations cohérentes (28).

**23.** Chaîne de réception (1) de signaux selon la revendication 22, lorsque les moyens de traitement numérique (7) comportent des moyens de démodulation et de synchronisation (23), les moyens de sélection (27) d'échantillons du signal reçu étant reliés auxdits moyens de démodulation et de synchronisation (23).

**24.** Procédé de réception de signaux comportant les étapes de :

- réception d'un signal,
- transformation du signal reçu en au moins deux signaux corrélés en phase ou en opposition de phase,
- répartition de chaque signal corrélé sur au moins une voie (4a, 4b), les voies (4a, 4b) étant identiques,
- conversion analogique-numérique sur 1 bit des signaux corrélés en phase ou en opposition de phase, sur chacune des voies (4a, 4b),
- réalisation d'au moins une opération entre les signaux convertis issus desdites voies (4a, 4b),

les voies (4a, 4b) étant des parties électroniques distinctes (6a, 6b) introduisant des bruits non corrélés sur chacune des voies (4a, 4b), et l'opération entre les signaux convertis comportant au moins une multiplication, ou au moins une addition lorsque lesdits signaux sont en phase, ou au moins une soustraction lorsque lesdits signaux corrélés sont en opposition de phase, ou au moins une combinaison linéaire des signaux ou au moins une égalisation des signaux.

25. Procédé de réception de signaux selon la revendication 24, comportant en outre une étape d'amplification des signaux corrélés.

26. Procédé de réception de signaux selon la revendication 25, l'étape d'amplification étant réalisée entre l'étape de répartition de chaque signal corrélé sur au moins une voie (4a, 4b) et l'étape de conversion analogique-numérique sur 1 bit des signaux corrélés.

27. Procédé de réception de signaux selon l'une quelconque des revendications 25 ou 26, l'amplification des signaux corrélés étant une amplification linéaire ou non linéaire, telle une amplification avec saturation, et/ou à gain constant.

28. Procédé de réception de signaux selon l'une quelconque des revendications 25 à 27, comportant au moins une étape supplémentaire d'amplification faible bruit sur au moins une des voies (4a, 4b) avant l'étape d'amplification des signaux corrélés.

29. Procédé de réception de signaux selon l'une quelconque des revendications 24 à 28, comportant après l'étape d'opération entre les signaux convertis, au moins une étape de filtrage, tel un filtrage passe-bande, et/ou au moins une étape d'échantillonnage, et/ou au moins une étape de filtrage adaptée dynamiquement.

30. Procédé de réception de signaux selon l'une quelconque des revendications 24 à 29, comportant, après l'étape d'opération entre les signaux convertis, au moins une étape de répartition du signal obtenu sur au moins une voie de communication (25) et au moins une voie de localisation (26).

31. Procédé de réception de signaux selon l'une quelconque des revendications 24 à 30, la conversion analogique-numérique étant asynchrone.

32. Procédé de réception de signaux selon l'une quelconque des revendications 24 à 31, comportant, pour le traitement des données transmises, au moins une étape d'intégration du signal multiplié, et/ou au moins une étape d'intégrations cohérentes, et/ou au moins une étape de démodulation et de synchronisation.

33. Procédé de réception de signaux selon l'une quelconque des revendications 24 à 32, comportant, pour mesurer une distance séparant une chaîne de réception (1) mettant en oeuvre ledit procédé de réception d'un émetteur du signal reçu, au moins une étape de sélection d'échantillons du signal reçu, et/ou au moins une étape d'intégrations cohérentes.

**Claims**

1. A signals reception chain (1) comprising:

   - an input interface (2) performing a reception of a signal and a transformation of the received signal into at least two signals correlated in phase or in opposite phase, each of the correlated signals being distributed on at least one channel (4a, 4b), the channels (4a, 4b) being identical,
   - analog-digital conversion means (6a, 6b) on 1 bit of the correlated signals in phase or in opposite phase, on each of the channels (4a, 4b),
   - digital processing means (7) of the converted signals stemmed from said channels (4a, 4b), comprising at least means (8) for performing operations between said converted signals in phase or in opposite phase,

   the channels (4a, 4b) being separate electronic parts introducing uncorrelated noise on each channel (4a, 4b), and means (8) for performing operations comprising multiplication means, or addition means when said converted signals are in phase, or subtraction means when said converted signals are in opposite phase, or means for performing operations (8) performing at least one linear combination or one equalization of the converted signals.

2. The signals reception chain (1) according to claim 1, also comprising amplification means (5a, 5b).

3. The signals reception chain (1) according to claim 2, amplification means (5a, 5b) being arranged between the input interface (2) and analog-digital conversion means (6a, 6b).

4. The signals reception chain (1) according to any one of claims 2 or 3, amplification means (5a, 5b) performing a linear or non-linear amplification, such as an amplification with saturation.

5. The signals reception chain (1) according to any one of claims 2 to 4, amplification means (5a, 5b) having a constant gain.

6. The signals reception chain (1) according to one of preceding claims, multiplication means (8) comprising at least one exclusive OR gate when the received signal is transformed into two correlated signals.

7. The signals reception chain (1) according to claim 6, the output from the exclusive OR gate of the multiplication means (8) being an inverting output when the two correlated signals are in phase.

8. The signals reception chain (1) according to any one of preceding claims, analog-digital conversion means (6a, 6b) being asynchronous.

9. The signals reception chain (1) according to any one of preceding claims, analog-digital conversion means (6a, 6b) comprising at least one comparator.

10. The signals reception chain (1) according to any one of preceding claims, the input interface (2) comprising at least one antenna (3).

11. The signals reception chain (1) according to any one of preceding claims, the input interface (2) comprising at least one antenna (3a, 3b) for each channel (4a, 4b).

12. The signals reception chain (1) according to any one of claim 1 to 10, the input interface (2) distributing the received signal on each channel (4a, 4b).

13. The signals reception chain (1) according to claim 10, the input interface (2) comprising at least one low noise differential amplifier (10) comprising at least two differential inputs (11, 12), the first one (11) being connected to the antenna (3) and the second one (12) to a zero potential (13), for example a ground, and at least one output for each channel (4a, 4b).

14. The signals reception chain (1) according to claim 13, the second differential input (12) being connected to the zero potential (13) through at least one impedance (14).

15. The signals reception chain (1) according to claim 10, the input interface (2) comprising at least one balun transformer (15) comprising a primary side (16) connected between the antenna (3) and a zero potential (13), for example a ground, and a secondary side (17) connected to the channels (4a, 4b).

16. The signals reception chain (1) according to claim 15, the primary side (16) being connected to the zero potential (13) through at least one impedance (14).

17. The signals reception chain (1) according to any one of claims 14 or 16, the impedance (14) being equal to the equivalent impedance of the antenna (3).

18. The signals reception chain (1) according to any one of preceding claims, the input interface (2) comprising at least one low noise amplifier (9a, 9b).

19. The signals reception chain (1) according to any one of preceding claims, digital processing means (7) comprising, after means (8) for performing operations, filtering means (18), such as a pass-band filter, and/or sampling means (19), and/or dynamically adapted filtering means (20).

20. The signals reception chain (1) according to any one of preceding claims, digital processing means (7) comprising, after means (8) for performing operations, a communication channel (25) for a processing of the transmitted data and a positioning channel (26) for measuring a distance separating the reception chain from a received signal transmitter.

21. The signals reception chain (1) according to any one of preceding claims, digital processing means (7) comprising at least one integrator filter (21), and/or at least one coherent integrations filter (22), and/or demodulation and synchronization means (23), for the processing of the transmitted data.

22. The signals reception chain (1) according to any one of preceding claims, digital processing means (7) comprising means (27) for selecting samples of the received signal, and/or at least one coherent integrations filter (28), to measure a distance separating the reception chain (1) from a received signal transmitter.

23. The signals reception chain (1) according to claim 22, means (27) for selecting samples of the received signal being connected to said demodulation and synchronization means (23) when digital processing means (7) comprise demodulation and synchronization means (23).

24. A method for signals reception comprising the following steps:

- reception of a signal,
- transformation of the received signal into at least two signals correlated in phase or in opposite phase,
- distribution of each correlated signal on at least one channel (4a, 4b), the channels (4a, 4b) being identical,
- analog-digital conversion of the correlated signals in phase or in opposite phase on 1 bit, on each channel (4a, 4b),
- performing at least one operation between the converted signals stemmed from said channels (4a, 4b),

the channels (4a, 4b) being separate electronic parts (6a, 6b) introducing uncorrelated noise on each channel (4a, 4b), and the operation between the converted signals comprising at least one multiplication, or at least one addition when said signals are in phase, or at least one subtraction when said correlated signals are in opposite phase, or at least one linear combination of the signals or at least one equalization of the signals.

25. The signals reception method according to claim 24, also comprising a step of amplification of the correlated signals.

26. The signals reception method according to claim 25, the amplification step being done between the step of distribution of each correlated signal on at least one channel (4a, 4b) and the step of analog-digital conversion on 1 bit of the correlated signals.

27. The signals reception method according to any one of claims 25 or 26, the amplification of the correlated signals being a linear or non-linear amplification, such as amplification with saturation and/or with a constant gain.

28. The signals reception method according to any one of claims 25 to 27, comprising at least one additional low noise amplification step on at least one of the channels (4a, 4b) before the step of amplification of the correlated signals.

29. The signals reception method according to any one of claims 24 to 28, comprising at least one filtering step, for example a pass band filtering, and/or at least one sampling step, and/or at least one dynamically adapted filtering step, after the operation step between the correlated signals.

30. The signals reception method according to any one of claims 24 to 29, comprising at least one step to distribute the signal obtained over at least one communication channel (25) and at least one positioning channel (26), after the operation step between the correlated signals.

31. The signals reception method according to any one of claims 24 to 30, the analog-digital conversion being asynchronous.

32. The signals reception method according to any one of claims 24 to 31, comprising at least one integration step of the multiplied signal, and/or at least one coherent integrations step, and/or at least one demodulation and synchronization step, for processing transmitted data.

33. The signals reception method according to any one of claims 24 to 32, comprising at least one step to select samples of the received signal, and/or at least one coherent integrations step, to measure a distance separating a reception chain (1) carrying out said reception method from a received signal transmitter.

**Patentansprüche**

1. Empfangskette (1) von Signalen, Folgendes aufweisend:

   - eine Eingangsschnittstelle (2), die den Empfang eines Signals und das Umformen des empfangenen Signals in mindestens zwei korrelierte Signale in Phase oder in Phasenopposition ausführt, wobei jedes der korrelierten Signale auf mindestens einen Kanal (4a, 4b) verteilt wird, und die Kanäle (4a, 4b) identische sind,
   - Mittel zur Analog-Digital-Umwandlung (6a, 6b) auf 1 Bit der korrelierten Signale in Phase oder in Phasenopposition auf jedem der Kanäle (4a, 4b),
   - Mittel zur digitalen Verarbeitung (7) der umgewandelten Signale, die aus den gennanten Kanäle (4a, 4b) hervorgeganen sind, die mindestens Mittel für Operationen (8) zwischen den gennanten umgewandelten Signalen in Phase oder in Phasenopposition aufweisen,

   wobei die Kanäle (4a, 4b) separate elektronische Teile sind, die nicht korreliertes Rauschen auf jedem der Kanäle (4a, 4b) einführen, und wobei die Mittel für Operationen (8) Mittel zum Multiplizieren oder Mittel zum Addieren aufweisen, wenn die gennanten umgewandelten Signale in Phase sind, oder Mittel zur Subtraktion, wenn die gennanten umgewandelten Signale in Phasenopposition sind, oder Mittel für Operationen (8), die mindestens eine Lineare Kombination oder einen Abgleich der umgewandelten Signale ausführen.

2. Empfangskette (1) von Signalen nach Anspruch 1, die ferner Verstärkungsmittel (5a, 5b) aufweist.

3. Empfangskette (1) von Signalen nach Anspruch 2, wobei die Verstärkungsmittel (5a, 5b) zwischen der Eingangsschnittstelle (2) und den Mitteln zur Analog-Digital-Umwandlung (6a, 6b) angeordnet sind.

4. Empfangskette (1) von Signalen nach einem der Ansprüche 2 oder 3, wobei die Verstärkungsmittel (5a, 5b) eine lineare oder nicht lineare Verstärkung ausführen, wie zum Beispiel eine Verstärkung mit Sättigung.

5. Empfangskette (1) von Signalen nach einem der Ansprüche 2 bis 4, wobei die Verstärkungsmittel (5a, 5b) eine konstante Verstärkung haben.

6. Empfangskette (1) von Signalen nach einem der vorhergehenden Ansprüche, wobei die Multiplikationsmittel (8) mindestens ein Exklusiv-ODER-Gatter aufweisen, wenn das empfangene Signal in zwei korrelierte Signale umgewandelt wird.

7. Empfangskette (1) von Signalen nach Anspruch 6, wobei der Ausgang des Exklusiv-ODER-Gatters der Multiplikationsmittel (8) ein Umkehrausgang ist, wenn die zwei korrelierten Signale in Phase sind.

8. Empfangskette (1) von Signalen nach einem der vorhergehenden Ansprüche, wobei die Mittel zur Analog-Digital-Umwandlung (6a, 6b) asynchron sind.

9. Empfangskette (1) von Signalen nach einem der vorhergehenden Ansprüche, wobei die Mittel zur Analog-Digital-Umwandlung (6a, 6b) mindestens einen Komparator aufweisen.

10. Empfangskette (1) von Signalen nach einem der vorhergehenden Ansprüche, wobei die Eingangsschnittstelle (2) mindestens eine Antenne (3) aufweist.

11. Empfangskette (1) von Signalen nach einem der vorhergehenden Ansprüche, wobei die Eingangsschnittstelle (2) mindestens eine Antenne (3a, 3b) für jeden der Kanäle (4a, 4b) aufweist.

12. Empfangskette (1) von Signalen nach einem der Ansprüche 1 bis 10, wobei die Eingangsschnittstelle (2) das empfangene Signal auf jeden der Kanäle (4a, 4b) verteilt.

13. Empfangskette (1) von Signalen nach Anspruch 10, wobei die Eingangsschnittstelle (2) mindestens einen Differenzialverstärker mit schwachem Rauschen (10) aufweist, der mindestens zwei Differenzialeingänge (11, 12) aufweist, wobei der erste (11) mit der Antenne (3) und der zweite (12) mit einem Potenzial gleich null (13), wie zum Beispiel mit einer Masse, und mindestens einem Ausgang für jeden der Kanäle (4a, 4b) verbunden ist.

14. Empfangskette (1) von Signalen nach Anspruch 13, wobei der zweite Differenzialeingang (12) mit dem Potenzial gleich null (13) über mindestens eine Impedanz (14) verbunden ist.

15. Empfangskette (1) von Signalen nach Anspruch 10, wobei die Eingangsschnittstelle (2) mindestens einen Balun-Transformator (15) aufweist, der eine Primärseite (16) aufweist, die zwischen der Antenne (3) und einem Potenzial gleich null (13), wie zum Beispiel eine Masse, und einer Sekundärseite (17) verbunden ist, wobei die Sekundärseite (17) mit den Kanälen (4a, 4b) verbunden ist.

16. Empfangskette (1) von Signalen nach Anspruch 15, wobei die Primärseite (16) mit dem Potenzial gleich null (13) über mindestens eine Impedanz (14) verbunden ist.

17. Empfangskette (1) von Signalen nach einem der Ansprüche 14 oder 16, wobei die Impedanz (14) gleich der äquivalenten Impedanz der Antenne (3) ist.

18. Empfangskette (1) von Signalen nach einem der vorhergehenden Ansprüche, wobei die Eingangsschnittstelle (2) mindestens einen Verstärker mit schwachem Rauschen (9a, 9b) aufweist.

19. Empfangskette (1) von Signalen nach einem der vorhergehenden Ansprüche, wobei die Mittel zur digitalen Verarbeitung (7) nach den Mitteln für Operationen (8) Filtermittel (18) aufweisen, wie zum Beispiel ein Bandpassfilter und/oder Abtastmittel (19) und/oder dynamisch angepasste Filtermittel (20).

20. Empfangskette (1) von Signalen nach einem der vorhergehenden Ansprüche, wobei die Mittel zur digitalen Verarbeitung (7) nach den Mitteln für Operationen (8) einen Kommunikationskanal (25) für eine Verarbeitung der übertragenen Daten und einen Lokalisierungskanal (26) zum Messen einer Entfernung, die die Empfangskette von einem Sender des empfangenen Signals trennt, aufweisen.

21. Empfangskette (1) von Signalen nach einem der vorhergehenden Ansprüche, wobei die Mittel zur digitalen Verarbeitung (7) für die Verarbeitung der übertragenen Daten mindestens ein Mittelungsfilter (21) und/oder mindestens ein Filter kohärenter Integrationen (22) und/oder Mittel zur Demodulation und Synchronisation (23) aufweisen.

22. Empfangskette (1) von Signalen nach einem der vorhergehenden Ansprüche, wobei die Mittel zur digitalen Verarbeitung (7) zum Messen einer Entfernung, die die Empfangskette (1) von einem Sender des empfangenen Signals trennt, Mittel zur Auswahl (27) von Abtastungen des empfangenen Signals und/oder mindestens ein Filter kohärenter Integrationen (28) aufweisen.

23. Empfangskette (1) von Signalen nach Anspruch 22, wobei, wenn die Mittel zur digitalen Verarbeitung (7) Mittel zur Demodulation und Synchronisation (23) aufweisen, die Mittel zur Auswahl (27) von Abtastungen des empfangenen Signals mit den Mitteln zur Demodulation und Synchronisation (23) verbunden sind.

24. Verfahren zum Empfangen von Signalen, das die folgenden Schritte aufweist:

    - Empfang eines Signals,
    - Umformen des empfangenen Signals in mindestens zwei korrelierte Signale in Phase oder in Phasenopposition,
    - Verteilen jedes korrelierten Signals auf mindestens einen Kanal (4a, 4b), und die Kanäle (4a, 4b) identische sind,
    - Analog-Digital-Umwandlung auf 1 Bit der korrelierten Signale in Phase oder in Phasenopposition auf jedem der Kanäle (4a, 4b),
    - Ausführen mindestens einer Operation zwischen den umgewandelten Signalen, die aus den gennanten Kanäle (4a, 4b) hervorgeganen sind,

    wobei die Kanäle (4a, 4b) separate elektronische Teile (6a, 6b) sind, die nicht korreliertes Rauschen auf jedem der Kanäle (4a, 4b) einführen, und wobei die Operation zwischen den umgewandelten Signalen mindestens eine Multiplikation oder mindestens eine Addition aufweist, wenn die gennanten Signale in Phase sind, oder mindestens eine Subtraktion, wenn die gennanten korrelierten Signale in Phasenopposition sind, oder mindestens eine lineare Kombination der Signale oder mindestens einen Abgleich der Signale.

25. Verfahren zum Empfangen von Signalen nach Anspruch 24, das ferner einen Verstärkungsschritt der korrelierten Signale aufweist.

26. Verfahren zum Empfangen von Signalen nach Anspruch 25, wobei der Verstärkungsschritt zwischen dem Schritt des Verteilens jedes korrelierten Signals auf mindestens einen Kanal (4a, 4b) und dem Schritt der Analog-Digital-Umwandlung auf 1 Bit der korrelierten Signale ausgeführt wird.

27. Verfahren zum Empfangen von Signalen nach einem der Ansprüche 25 oder 26, wobei das Verstärken der korrelierten Signale eine lineare oder nicht lineare Verstärkung ist, wie zum Beispiel eine Verstärkung mit Sättigung und/oder einer konstanten Verstärkung.

28. Verfahren zum Empfangen von Signalen nach einem der Ansprüche 25 bis 27, das mindestens einen zusätzlichen Verstärkungsschritt mit schwachem Rauschen auf mindestens einem der Kanäle (4a, 4b) vor dem Verstärkungsschritt der korrelierten Signale aufweist.

29. Verfahren zum Empfangen von Signalen nach einem der Ansprüche 24 bis 28, das nach dem Operationsschritt zwischen den umgewandelten Signalen mindestens einen Filterschritt, wie zum Beispiel ein Bandpassfiltern und/oder mindestens einen Abtastschritt und/oder mindestens einen dynamisch angepassten Filterschritt aufweist.

30. Verfahren zum Empfangen von Signalen nach einem der Ansprüche 24 bis 29, das nach dem Operationsschritt zwischen den umgewandelten Signalen mindestens einen Schritt des Verteilens des erzielten Signals auf mindestens einen Kommunikationskanal (25) und mindestens einen Lokalisierungskanal (26) aufweist.

31. Verfahren zum Empfangen von Signalen nach einem der Ansprüche 24 bis 30, wobei die Analog-Digital-Umwandlung asynchron ist.

32. Verfahren zum Empfangen von Signalen nach einem der Ansprüche 24 bis 31, das für die Verarbeitung der übertragenen Daten mindestens einen Integrationsschritt des multiplizierten Signals und/oder mindestens einen Schritt kohärenter Integrationen und/oder mindestens einen Demodulations und Synchronisationsschritt aufweist.

33. Verfahren zum Empfangen von Signalen nach einem der Ansprüche 24 bis 32, das zum Messen einer Entfernung, die eine Empfangskette (1), die das Empfangsverfahren ausführt, von einem Sender des empfangenen Signals trennt, mindestens einen Schritt der Auswahl von Abtastungen des empfangenen Signals und/oder mindestens einen Schritt kohärenter Integrationen aufweist.

FIG. 1

FIG. 3

FIG. 4

FIG. 2

EP 1 811 679 B1

EP 1 811 679 B1

FIG. 5

FIG. 6

21

FIG. 7

FIG. 8

FIG. 9

**EP 1 811 679 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **Stoica et al.** An Ultrawideband System Architecture for Tag Based Wireless Sensor Network. *IEEE,* 2005